# EUROPEAN PATENT SPECIFICATION

(11) **EP 1 298 370 B1**
(45) Date of publication and mention of the grant of the patent: **01.06.2005**
(21) Application number: 02425193.6
(22) Date of filing: 28.03.2002
(51) Int. Cl.: F16K 17/00

(54) **Safety plug**
Sicherheitsverschluss
Bouchon de sécurité

(43) Date of publication of application: 02.04.2003
(73) Proprietor: Olab S.r.l., 25030 Torbole Casaglia (Brescia) (IT)
(72) Inventor: Bottura, Cesare, 25100 Brescia (IT); Marchini, Vito, 25010, Desenzano del Garda (Brescia) (IT); Trapletti, Giuseppe, 25038 Rovato (Brescia) (IT)
(74) Representative: Long, Giorgio

(56) References cited:
- EP-A- 0 652 393
- EP-A- 0 744 566
- DE-C- 4 430 822
- DE-U- 20 113 631
- DE-U- 29 905 980
- US-A- 5 606 810

## Description

The present invention relates to a plug comprising a hand knob for use with containers of liquids, vapours, gases and the like.

A plug according to the preamble of claim 1 is disclosed in document DE-U-299 05 980.

It is known that during the normal use of a wide variety of appliances comprising a container for a working fluid, whether for domestic or industrial use, such as a clothes iron, a boiler, a radiator or the like, the heating of the fluid produces a generalized increase in the temperature of the entire container, including the portion to which the plug is designed to connect.

Accordingly, during the normal use of these appliances, the hand knob of the plug also becomes hot, which is an obvious drawback as it is dangerous for the user.

A need is felt, therefore, to provide a plug with a knob that can be grasped by a hasty user without being scalded and burned.

According to the present invention there is provided a plug comprising the features of claim 1. Advantageous embodiments of the invention are evident from the dependent claims.

Other features and advantages of the plug according to the present invention will be found in the description given below of a preferred embodiment thereof, with reference to the accompanying figures, in which:

Figure 1 is a partly sectioned perspective view of a safety plug comprising a hand knob and an engagement body in the down position;

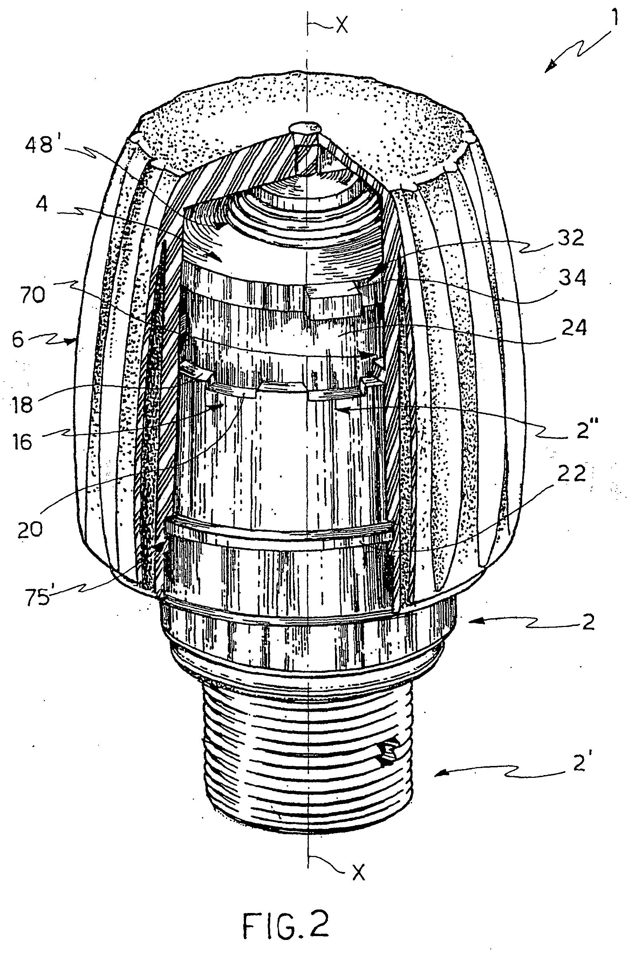

Figure 2 is a partly sectioned perspective view of the safety plug of Figure 1 equipped with the engagement body in the up position;

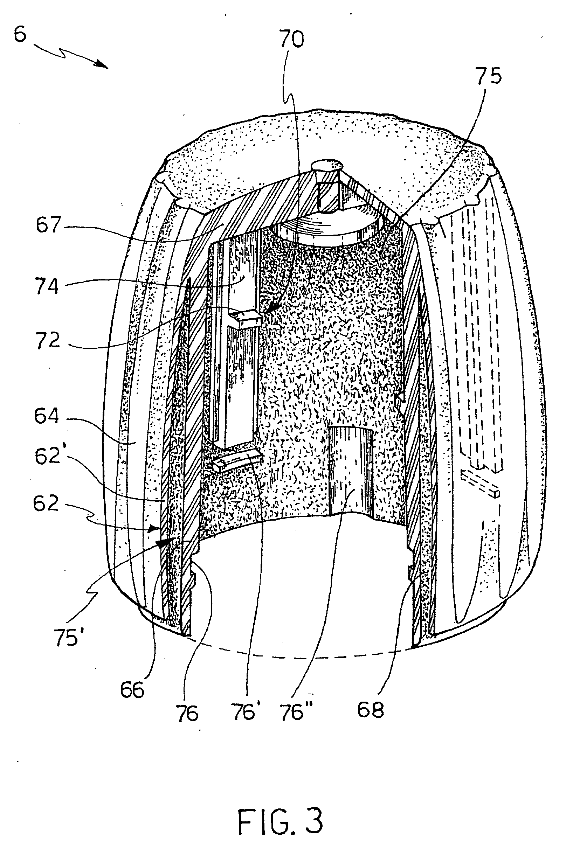

Figure 3 is a partly sectioned perspective view of the hand knob of Figure 1;

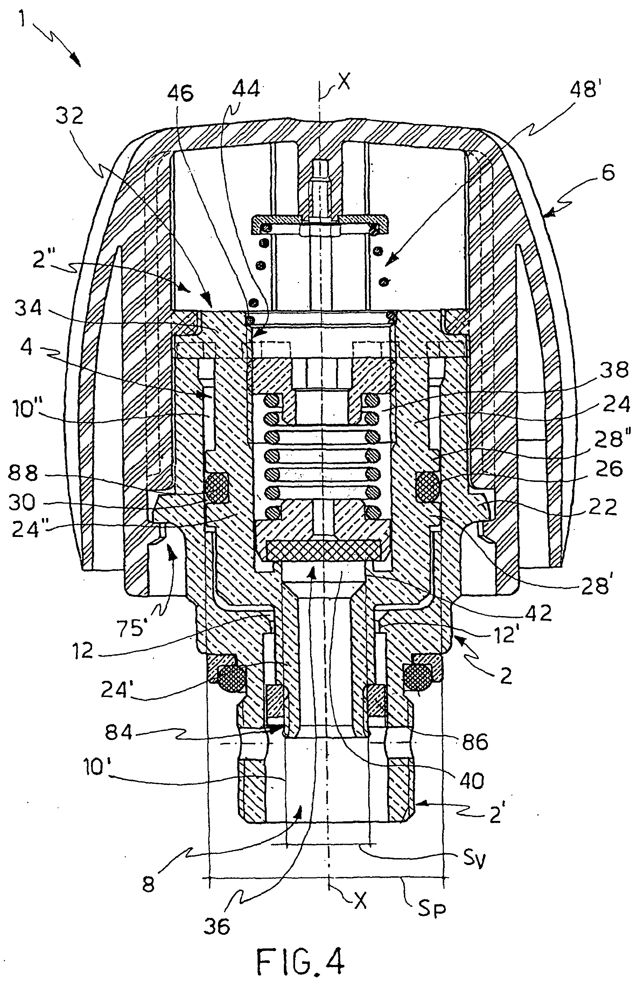

Figure 4 is a sectional view of the safety plug of Figure 1, with the engagement body in the down position;

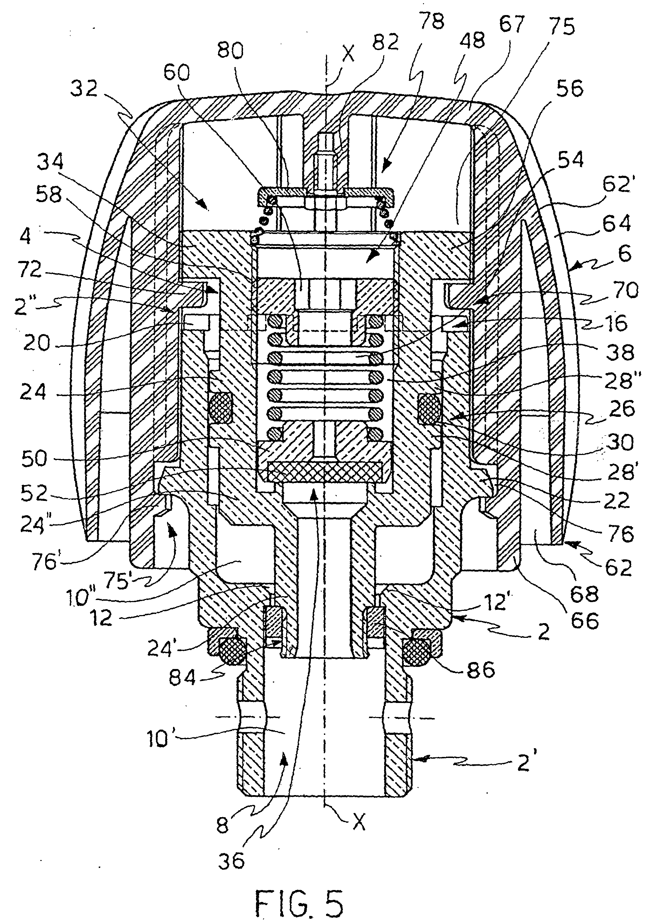

Figure 5 is a sectional view of the safety plug of Figure 2, with the engagement body in the up position;

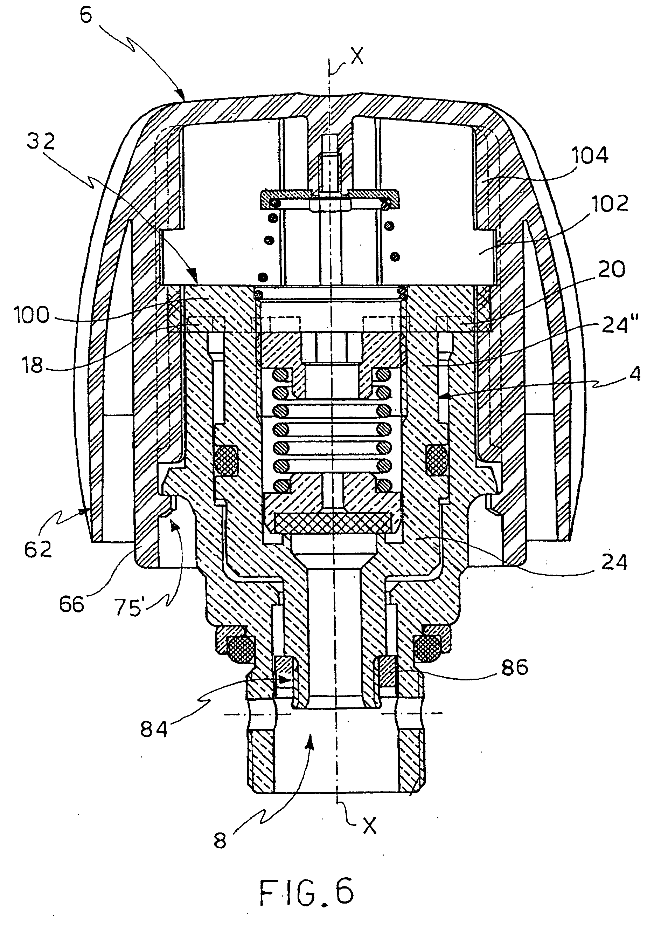

Figure 6 is a sectional view of an alternative embodiment of a safety plug, with an engagement body in the down position; and

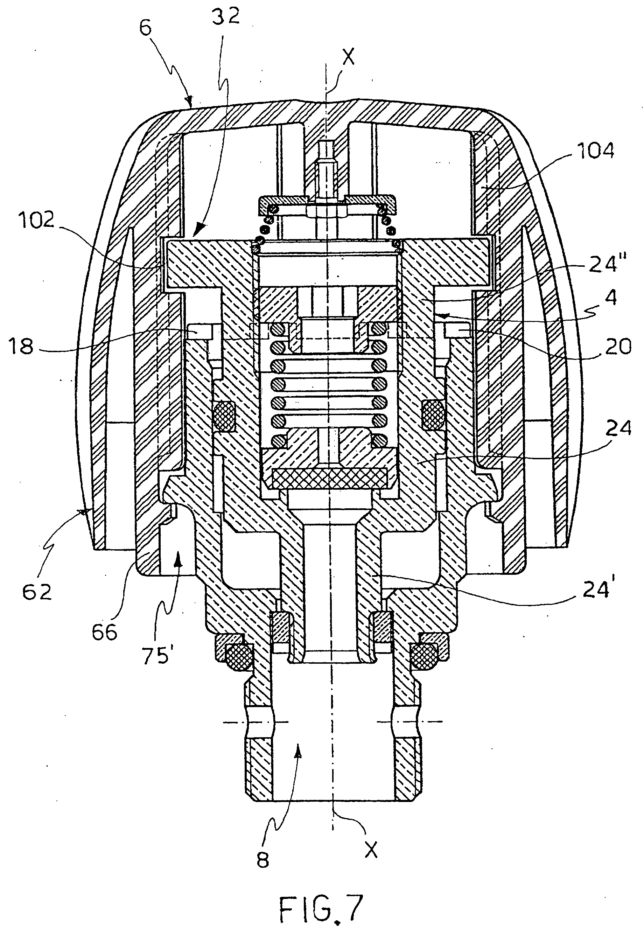

Figure 7 is a sectional view of the safety plug of Figure 6, with the engagement body in the up position.

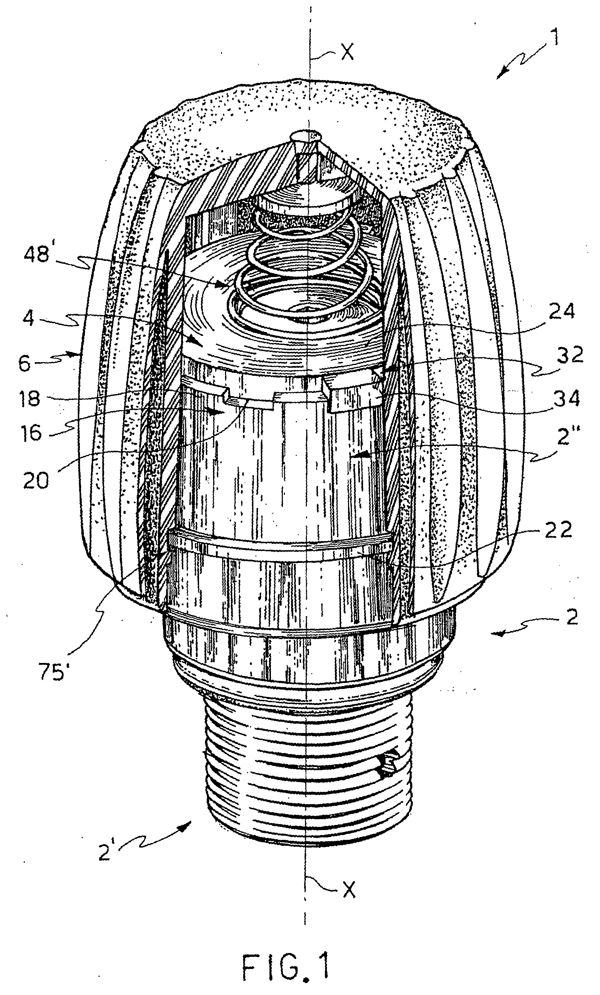

Referring to Figure 1, the number 1 denotes the whole of a plug which is formed around a central axis of symmetry X-X, that comprises a body 2, preferably threaded at a lower end 2', an engagement/disengagement body 4 and a hand knob 6 connected to the said body 2.

At its threaded end 2', the threaded body 2 can be screwed, in a fitted configuration, into a seat in a container of a working fluid (not shown).

The threaded body 2 is preferably internally hollow and tubular in shape, forming a cavity 8 of roughly cylindrical form about the central axis X-X.

In a preferred embodiment, the said cavity 8 of the threaded body 2 comprises at least two spaces in succession: an end space 10' near the threaded lower end 2' of the body 2, and a housing space 10", communicating with the end space 10' through an aperture 12 and extending upwards to an upper end 2" of the threaded body 2, the said upper end being remote from the lower threaded end 2'.

In the aperture 12 between the end space 10' and the housing space 10", the said end space 10' includes an annular stop 12' projecting radially into the said space 10'.

At the upper end 2" of the threaded body 2, the said threaded body is provided with mating engagement elements 16.

In a preferred embodiment, the said mating engagement elements take the form of an annular band that forms the terminal portion of the said hollow body 2 towards the upper end 2". This annular band is preferably shaped to generate a circumferential succession of engagement teeth 18 and engagement recesses 20 formed in an essentially axial direction.

In a preferred embodiment, on the outside of the threaded body 2 is an annular connecting edge 22 projecting from the outer surface of the said threaded body that forms mating elements connecting the body 2 to the knob 6.

The engagement/disengagement body 4, which includes pressure surfaces, is formed, in accordance with a preferred embodiment of the plug 1, by a piston 24 extending along the direction of the central axis X-X of the plug.

The said piston 24 preferably comprises in succession a first or anti-push-out portion 24' and a second or guiding and sealing portion 24". The said portions generally have different outside diameters, the guiding and sealing portion 24" having a larger outside diameter than the outside diameter of the anti-push-out portion 24'.

In accordance with one embodiment, the guiding and sealing portion 24" comprises sealing means 26, preferably comprising a succession of annular projections 28' and 28" separated axially by a sealing seat 30.

The engagement/disengagement body 4 also comprises mating elements 32.

In a preferred embodiment of the plug 1, the said mating elements comprise a succession of radially projecting mating projections 34 situated at the outermost end of the upper portion 24" of the piston 24. In this example there are four such mating projections 34.

In accordance with another embodiment, the piston 24 is internally hollow, having a through cavity formed preferably by the succession of a relief pressure indicating channel 36, preferably corresponding to the lower or anti-push-out portion 24' of the piston 24, and a housing space 38, preferably corresponding to the upper or guiding and sealing portion 24" of the said piston.

The relief pressure indicating channel 36 is in communication with the housing space via a calibrated aperture 40, bounded by an annular stop 42 that extends in an essentially axial direction and projects towards the housing space 34 of the piston 24.

The housing space 38 is identified by a cylindrical wall that possesses, in an end portion, a thread 44 remote from the relief pressure indicating channel 36 of the piston 24.

In a preferred embodiment, the said thread 44 terminates in a flared annular seat 46 for a first resilient element 48'.

The housing space 38 forms a housing for a relief valve 48, comprising a closure member 50 fitted with a seal 52, a second resilient element 54 and a preloading ring nut 56. The said preloading ring nut has an external thread 58 and a through relief hole 60, which is at least partly shaped to be able to take a workshop tool, such as a hexagon key, to allow the said ring nut 56 to be screwed in or out.

The threaded body 2 is connectable to the hand knob 6.

The knob 6 comprises an external handgrip 62 designed to enable the user to screw the plug 1 onto the seat of the container and/or unscrew it.

The said external handgrip preferably takes the form of a cap 62' with a plurality of individual ribs 64 on its outer surface.

The abovementioned cap represents only a preferred example of an embodiment of the handgrip, other embodiments being possible, such as, by way of example, a circumferential succession of outwardly-projecting radial ribs.

The handgrip 62 encloses a safety wall 66 that is preferably cylindrical and concentric with the said handgrip 62.

The handgrip 62 and the safety wall 66 converge, at an upper end portion 66' of the said safety wall 66, towards a blind end 67 that joins them together.

The handgrip 62 and the safety wall 66 are thermally isolated, preferably by a gap 68 between the said safety wall and the said handgrip.

In accordance with another embodiment, the safety wall is thermally isolated from the handgrip by a thermally insulating material of which the safety wall or the handgrip are made.

The knob 6 also includes mating elements 70 for engagement of the knob 6.

The said mating engagement elements 70 are preferably represented by a circumferential succession of pegs 72 projecting from reinforcing ribs 74 on the inside of the safety wall 66 towards the central axis X-X of the plug 1. In the example described, there are two such pegs 72 positioned axially with respect to the safety wall 66 in such a way that a sliding space 75 is formed between the said pegs and the blind end 67 of the hand knob 6

In one embodiment, the hand knob 6 comprises connecting means 75' connecting the knob 6 to the body 2 of the plug 1.

The said connecting means 75' of the knob 6 preferably comprise an annular connecting space 76 formed on the inside of the safety wall 66. In a preferred embodiment, the said connecting space 76 is defined by a circumferential succession of stop elements 76'. In the illustrative knob 6 described, there are four such stop elements 76'.

In a preferred embodiment, recessed passageways 76" are formed between the stop elements 76' of the safety wall 66 of the knob 6.

The plug 1, in another embodiment, possesses means 78 for preloading the safety device. These comprise a disc 80 attached to a protuberance 82 projecting axially from the blind end 67 of the knob 6 and central with respect to the said blind end.

In the assembled configuration of the safety plug 1, the piston 24 is housed in the cavity 8 of the threaded body 2, in such a way that the lower or anti-push-out portion 24' of the piston 24 is inserted with play in the end space 10' of the cavity 8 of the threaded body 2, passing through the aperture 12 between the said end space 10' and the housing space 10". The upper guiding and sealing portion 24" of the piston 24 is housed in the housing space 10" of the said threaded body.

The lower anti-push-out portion 24' of the piston 24 has a threaded section 84 carrying a stop nut 86. Below this nut, the anti-push-out portion 24' of the piston 24 is upset to prevent the possibility of the stop nut 86 from unscrewing and coming off.

The guiding and sealing portion 24" of the piston 24 possesses, in the sealing seat 30 defined by the external annular projections 28' and 28", a resilient ring 88 designed to be pushed into the said sealing seat 30 and having nominal dimensions such as to provide sealing contact with the inside surface of the housing space 10" of the threaded body 2.

Consequently, a disc of diameter equal to the diameter of the housing space 10" of the body 2 forms the pressurizable surface area Sp of the safety device of the plug 1. In particular, the said pressurizable surface area Sp can be located at the resilient ring 88 housed in the seat 30 of the piston 24.

The stop nut 86 has nominal outside dimensions such as to fit into the end space 10' of the body 2 with radial clearance. Radial clearance is also provided between the lower anti-push-out portion 24' of the piston 24 and the aperture 12 of the body 2, and between the guiding and sealing portion 24" of the piston 24 and the housing space 10" of the body 2.

The said radial clearances create, by their succession, an annular safety pressure warning channel 90 which indicates the pressure of the working fluid present inside the pressurizable container at the pressurizable surface area Sp of the safety device at the location of the resilient ring 88.

The housing space 38 of the piston 24 forms a housing for the relief valve 48.

In particular, the closure member 50 rests on the annular stop 42 via the seal 52 fitted inside it. The said closure member is held in position against the annular stop 42 by the second resilient element 54, which is preloaded by the preloading ring nut 56 screwed into the housing space 38 of the piston 24.

It is obvious that the position assumed by the preloading ring nut 56 determines the preloading force of the second resilient element 54 and, therefore, the force pressing the closure member 50 onto the annular stop 42.

The surface of the seal 52 which is directed towards the relief pressure indicating channel 36 of the piston 24 forms the pressurizable surface area Sv of the safety valve. The aperture 40, therefore, positioned between the said channel and the housing space 38 of the piston 24, is an accurately sized aperture.

The closure member 50 is mounted with radial clearance in the housing space 38, while the preloading ring nut 56 contains the relief hole 60. Consequently the radial clearance of the closure member 50, the portion of the housing space 38 between the said closure member and the preloading ring nut 56 and the relief hole 60 of the said ring nut create a fluid expulsion channel for the relief valve 48. The said expulsion channel is in communication with the external environment via an expulsion channel inside the hand knob 6, provided by the sliding space 75 of the said hand knob and the radial clearance between the safety wall 66 of the said knob and the outer surface of the threaded body.

When the plug 1 is in the assembled configuration, the hand knob 6 sits on top of the threaded body 2.

The said knob is connected axially to the threaded body 2 by means of the annular edge 22 of the body 2 sitting in the annular connecting space 76 of the knob 6.

The disc 80 integral with the knob 6 acts as a support plate for the first resilient element 48', one end of which is engaged with the said disc and the other housed in the seat 46 of the piston 24.

The preloading means 78 of the safety device, which comprise the disc 80, the first resilient element 48' and the seat 46 of the piston for the said first resilient element, result in a preloading force acting on the piston 24 and, at the same time, a force equal and opposite to the latter acting on the hand knob 6, stabilizing the position of the latter with respect to the threaded body 2 by means of the stop between the stop elements 76' defining the annular connecting space 76 and the annular edge 22 of the threaded body 2.

In particular, the annular edge 22 of the threaded body 2 has a diameter such that it extends, when the knob 6 is assembled on the threaded body 2, almost into contact with the inside surface of the safety wall 66 of the knob 6. The recessed passageways 76" formed in the safety wall 66 of the knob 6 therefore define, when the knob 6 is assembled on the threaded body 2, passages of communication between the internal space of the said knob and the external environment.

Moreover, the positioning of the knob 6 with respect to the threaded body 2 is such that the pegs 72 of the said knob are situated with their lower surface above the upper surface of the engagement teeth 18 of the threaded body. In this way there is no rotational interference between the knob 6 and the said threaded body 2.

In a first configuration of rest for the safety plug 1, the pressure of the working fluid inside the container is below a safety pressure.

The piston 24 is in a down position inside the cavity 8 of the threaded body 2, with the engagement projections 34 sitting in the engagement recesses 20 of the threaded body 2.

The piston is held in this position not only by its own weight (which applies only to cases in which the force of gravity acting on the piston pulls the said piston against the engagement recesses 20), but also by the preloading force exerted by the first resilient element 48'.

In the down position, the engagement elements 32 of the piston 24 engage with the mating engagement elements 16 of the threaded body 2 and with the mating engagement elements 70 of the knob 6.

As described earlier, it is preferable for the said engagement elements 32 of the piston 24 to be formed by the engagement projections 34, the mating engagement elements 16 of the threaded body 2 by the teeth 18, and the mating engagement elements 70 of the knob 6 by the pegs 72.

The said engagement projections 34 of the piston 24, in the said down position of the piston 24, fitting in the engagement recesses 20 between the teeth 18 of the threaded body 2, project, by virtue of their axial thickness, above the said engagement teeth 18 of the body 2.

At the same time, with the knob 6 positioned with respect to the threaded body 2 in the manner described above, the pegs 72 of the said knob interfere rotationally with the said engagement projections 34 of the piston 24.

In the rest position of the piston 24, rotation of the knob 24 causes, owing to the interference of the latter with the engagement projections 34 of the piston 24, rotation of the piston 24 and, therefore, because of the engagement between the same engagement projections 34 of the piston 24 and the engagement teeth 18 of the threaded body 2, rotation of the threaded body 2. It is therefore possible to screw the safety plug 1 into or out of the seat provided in the container of working fluid.

When the knob 6 is assembled on the body 2, the contact between the said body 2 and the said knob 6 sitting on top of it is limited to the contact between the stop elements 76' of the safety wall 66 and the annular edge 22 of the said body 2.

The part of the hand knob 6 which is gripped by the user is the handgrip 62, which is attached to the safety wall 66 by the blind end 67.

The body 2, which is generally hot because of the contact with the container of working fluid, to which it is usually screwed, transfers heat to the knob 6 through a limited contact between the stop elements 76' of the said knob and the annular edge 22 of the said body 2.

In addition, the said body 2 is enclosed within the safety wall 66, which is attached to the handgrip 62 only by the blind end 67, and the said handgrip 62 has no contact with the safety wall 66 except via the said blind end 67 because of the presence of the gap 68.

What is more, when the user grasps the knob 6, he is touching the ribs 64 formed on the outside of the said handgrip 62, which also limits the contact between the user and the handgrip 62.

The preloading means 78 not only keep the piston 24 pressed against the body 2 of the plug 1 by means of the resilient action of the first resilient element 48', but also, by means of an equal and opposite action, support the knob 6 in position with respect to the said body 2.

In particular, the said preloading means 78 keep the stop elements 76' of the annular space 76 pressed against the annular edge 22 of the body 2.

When the pressure of the working fluid in the container is equal to or above a safety pressure, the plug 1 goes from the rest configuration to a safety configuration.

The pressure of the working fluid, if equal to or greater than the safety pressure, which is transmitted to the pressurizable surface area Sp of the safety device is sufficient to generate a force that will lift the piston 24, arresting it in an up position determined by the position of the stop nut 86 on the lower anti-push-out portion 24' of the piston 24, which encounters the annular stop 12' next to the aperture 12 of the cavity 8 of the threaded body 2.

In the up position of the piston 24, the engagement projections 34 are positioned axially in such a way that their lower surface is above the upper surface of the pegs 72 of the knob 6, with the result that there is no rotational interference between the piston 24 and the threaded body 2, or between the piston 24 and the knob 6.

In the safety configuration, therefore, rotation of the knob corresponds to the pegs 72 of the knob 6 moving over the tops of the engagement teeth 18 of the threaded body 2 and underneath the engagement projections 34 of the piston 24, with no interference.

In other words, in the safety configuration of the plug 1, turning the knob has no effect on the piston or on the threaded body, making it impossible to screw the said threaded body 2 onto or off the seat provided on the container.

In particular, turning the knob has no effect on the piston and, therefore, there is no engagement between the piston and the threaded body due to the resilient ring 88.

If the pressure of the working fluid equals a predetermined relief pressure, the plug 1 assumes a relief configuration.

For working fluid pressures less than the relief pressure, the relief valve 48 maintains a closed configuration, shutting off the expulsion path of the working fluid.

In its closed configuration, the seal 52 housed in the closure member 50 of the relief valve 48 is pressed against the annular stop 42 of the housing space 38 of the piston 24.

The seal 52 is kept in this position by the preloading force of the second resilient element 54, which is preloaded by the preloading ring nut 56.

When the pressure of the working fluid is equal to or above the safety pressure, but below the relief pressure, the piston 24 is raised, but the relief valve remains in its closed configuration.

When the pressure of the working fluid is equal to the relief pressure, the relief valve 48 moves into an open configuration in which the seal is lifted off the annular seat 42 by the force resulting from the relief pressure, which acts, through the relief pressure indicating channel 36, on the seal 52 in the accurately-sized aperture 42, that is on the pressurizable surface area Sv.

In the open configuration of the relief valve 48, the working fluid escapes into the external environment via the safety plug.

In particular, in the relief configuration of the plug 1, the pressurized working fluid escapes from the piston 24 through the expulsion channel, into the sliding space 75 of the knob 6 and, from the said sliding space 75 of the knob 6, escapes to the outside, striking the outer surface of the threaded body 2 and the inner surface of the safety wall 66 of the knob 6, and passes into the external environment through the recessed passageways 76" of the safety wall 66.

Since the said pressurized working fluid is generally hot, when it strikes the safety wall 66 of the knob 6 it heats the said wall.

The handgrip 62 of the knob 6 is thermally isolated from the safety wall 66 of the said knob, preferably by the gap 68 between the safety wall 66 and the handgrip 62, so that accidental contact by the user with the knob 6, even when the fluid is at the relief pressure, is not made dangerous by overheating of the said handgrip 62.

There now follows a description of an alternative embodiment of a safety plug, with particular reference to those parts which differentiate this embodiment from that described above.

The engagement/disengagement body 4, which is preferably a piston 24, comprises engagement elements 32 which take the form of a succession of engagement projections 100 projecting radially from the piston 24 at the terminal end of the upper portion 24" of the said piston.

The engagement projections 100 have a radial length such as to project, when the piston 24 is fitted inside the threaded body 2, from the said threaded body.

The handgrip 62 of the knob 6 encloses a safety wall 66, which is preferably cylindrical and concentric with the handgrip 62.

The said safety wall 66 contains internally a sliding space 102 which interrupts the continuity of reinforcing ribs 104 formed on the inside of the knob 6.

In the rest configuration of the safety plug 1, the piston 24 is in a down position inside the cavity 8 of the threaded body 2, with the engagement projections 100 at the bottom of the engagement recesses 20 of the threaded body, in rotational interference with the engagement teeth 18 of the threaded body 2.

At the same time, because the said engagement projections 100 of the piston 24 project radially from the threaded body 2, they extend between the reinforcing ribs 104 of the knob 6 and interfere rotationally with the said knob.

In the rest position of the piston 24, turning the knob 6 has the effect, due to interference of its reinforcing ribs 104 with the engagement projections 100 of the piston 24, of turning the piston 24 and, therefore, owing to the engagement between the same engagement projections 100 of the piston 24 and the engagement teeth 18 of the threaded body 2, of also turning the threaded body 2. It is therefore possible to screw the safety plug 1 onto or off the seat provided in the container of working fluid.

When the piston 24 is in the up position, i.e. when the plug 1 is in the safety configuration, the engagement projections 100 are positioned axially so as to sit in the sliding space 102 of the knob, and, by virtue of the travel of the piston, in such a way that the lower surface of the engagement projections 100 are above the upper surface of the engagement teeth 18 of the piston. There is therefore no rotational interference between the piston 24 and the threaded body 2, or between the piston 24 and the knob 6.

In the safety configuration, therefore, when the knob is turned, those parts of the engagement projections 100 which project from the threaded body 2 move within the sliding space 102 of the knob 6, so there is no effect on the piston or on the threaded body.

Unusually, the hand knob of the plug according to the invention can be grasped by a user without the user being burned or suffering other physical injury.

Another advantageous aspect is that the hand knob of the plug according to the invention limits the surface areas of contact between this knob and the body to which it is connected, keeping the handgrip of the said knob at a temperature that will not pose a danger to the user.

In particular, the knob is in contact with the body connected to the container of working fluid through a succession of stop elements on the safety wall placed against the annular edge of the body and the safety wall is integral with the handgrip via the blind end.

Advantageously, therefore, the surfaces where the knob of the plug according to the invention is in contact with the body to which it is connected are on the safety wall of this knob, which is thermally isolated from the handgrip.

This is because the said safety wall and the said handgrip are separated by the gap which isolates them thermally.

The plug according to the invention also has the additional advantage of being fitted with a safety device preventing the body from being unscrewed from the container of fluid when the pressure of the fluid inside the said container equals or exceeds a predetermined safety pressure.

Advantageously too, the safety plug prevents this threaded body from being unscrewed from the seat on the container even if the threaded body is screwed loosely onto the seat of the container and the pressure of the working fluid is equal to or above a predetermined safety pressure.

In addition, the abovementioned knob of the plug has the advantage of reducing friction with the piston and the threaded body, making the safety device more reliable.

Another advantageous aspect is that the knob of the plug according to the invention defines an explusion path for the working fluid which escapes from the container through the plug when the pressure of the fluid exceeds a predetermined relief pressure.

Advantageously, the knob of the plug defines an expulsion channel for the fluid which conveys the said fluid towards the container to which the plug is connected, ensuring that fluid is not sprayed dangerously towards the user.

In particular, the hand knob of the plug according to the invention is advantageously provided with recessed passageways that create expulsion passageways for the fluid between the stop elements which locate the knob with respect to the body.

Lastly, advantageously, the grip of the abovementioned knob of the plug is secure and durable.

Clearly, a person skilled in the art will be able to make numerous modifications and alterations to the hand knob of the plug described above and illustrated with reference to the figures, in order to fulfil particular and specific requirements, all such modifications and alterations lying within the scope of protection of the invention as defined by the following claims.

## Claims

1. A plug (1) connectable to a container of working fluid comprising a hand knob (6),
said plug comprising a relief valve (48) that, when the pressure of the working fluid is equal to a relief pressure, moves into an open configuration and said working fluid escapes into the external environment via the plug (1),
said knob (6) comprising an external handgrip (62) designed to be grasped to enable the said plug to be screwed onto or off the container,
the said knob being **characterized in that** it also includes a safety wall (66) that is at least partially internal to the handgrip (62), substantially thermally isolated from the latter by a gap (68), the safety wall (66) being cylindrical and concentric with the said handgrip (62) and wherein in the open configuration of the plug, the inner surface of the safety wall (66) of the knob (6) being struck by the working fluid.

2. A plug according to Claim 1, in which the said safety wall (66) and the said handgrip (62) join at the top.

3. A plug according to Claim 2, in which the said safety wall (66) and the said handgrip (62) join at a blind end (67).

4. A plug according to any one of the preceding claims, in which the said handgrip (62) comprises a cap (62').

5. A plug according to Claim 4, in which the said cap (62') is provided with a plurality of external ribs (64).

6. A plug according to Claim 5, in which the said ribs (64) reduce the contact area between the user and the handgrip (62).

7. A plug according to Claim 6, in which the said ribs (64) are ribs with an anti-slip function.

8. A plug according to any one of the preceding claims, also comprising recessed passageways (76") in the safety wall (66).

9. A plug according to any one of the preceding claims, in which the said plug (1) comprises a safety device for preventing the said plug from being unscrewed from the container of working fluid in a safety configuration in which the pressure of the working fluid in the container is equal to or greater than a predefined safety pressure.

10. A plug according to Claim 9, in which the said knob also comprises mating engagement elements (70) and the said safety plug (1) also comprises:
- a body (2) threaded at a first threaded end (2') connectable to the said container; and
- an engagement/disengagement body (4) with engagement elements (32), which body can slide inside the said threaded body (2) between a down position, in which the said engagement elements engage with the mating engagement elements (70) on the said knob (6) and with mating engagement elements (16) on the said threaded body (2) so as to couple the engagement/disengagement body (4) rotationally with the knob (6) and the threaded body (2), and an up position in which the said engagement elements (32) are disengaged from the mating engagement elements (16) of the said threaded body (2).

11. A plug according to Claim 10, in which, in the up position of the engagement/disengagement body (4), the engagement elements (32) of the said engagement/disengagement body are also disengaged from the mating engagement elements (70) of the knob (6).

12. A plug according to Claims 10 or 11, in which the engagement/disengagement body (4) is held in the down position by preloading means.

13. A plug according to Claim 12, in which the said preloading means comprise a first preloaded resilient element (48') between the said engagement/disengagement body (4) and a flat stop element.

14. A plug according to Claim 13, in which the said flat stop element is a disc (80).

15. A plug according to one of Claims 10 to 14, in which the engagement/disengagement body (4) contains an internal housing space (38).

16. A plug according to Claim 15, in which the said housing space (38) houses the relief valve (48).

## Patentansprüche

1. Verschluss (1), der mit einem Behälter eines Arbeitsfluids verbindbar ist, einen Handknauf (6) aufweisend, wobei der Verschluss ein Entlastungs- bzw. Überdruckventil (48) aufweist, welches, wenn der Druck des Arbeitsfluids gleich zu einem Überdruck ist, sich in eine offene Konfiguration bewegt, und das Arbeitsfluid in die äußere Umgebung durch den Verschluss (1) entweicht, wobei der Knauf (6) einen äußeren Handgriff (62) aufweist, der so ausgeführt ist, um ergriffen zu werden, um es dem Verschluss zu ermöglichen, auf oder von dem Behälter geschraubt zu werden, wobei der Knauf **dadurch gekennzeichnet ist, dass** er ferner eine Sicherheits-wand (66) aufweist, welche zumindest teilweise intern bei dem Handgriff (62) ist, im Wesentlichen thermisch isoliert von dem letzteren durch einen Spalt (68) ist, wobei die Sicherheitswand (66) zylindrisch und mit dem Handgriff (62) konzentrisch ist, und wobei in der offenen Konfiguration des Verschlusses die innere Fläche der Sicherheitswand (66) des Knaufs (6) durch das Arbeitsfluid getroffen ist.

2. Verschluss nach Anspruch 1, bei welchem die Sicherheitswand (66) und der Handgriff (62) sich an der Oberseite verbinden.

3. Verschluss nach Anspruch 2, bei dem die Sicherheitswand (66) und der Handgriff (62) sich an einem Blindende (67) verbinden.

4. Verschluss nach einem der vorhergehenden Ansprüche, bei dem der Hand-griff (62) eine Kappe (62') aufweist.

5. Verschluss nach Anspruch 4, bei dem die Kappe (62') mit einer Viel- bzw. Mehrzahl von äußeren Rippen (64) versehen ist.

6. Verschluss nach Anspruch 5, bei dem die Rippen (64) den Berührungsbereich zwischen dem Benutzer und dem Handgriff (62) verringern.

7. Verschluss nach Anspruch 6, bei dem die Rippen (64) Rippen mit einer Antigleit- bzw. -rutschfunktion sind.

8. Verschluss nach einem der vorhergehenden Ansprüche, ferner vertiefte bzw. ausgesparte Durchgänge (76") in der Sicherheitswand (66) aufweisend.

9. Verschluss nach einem der vorhergehenden Ansprüche, bei dem der Ver-schluss (1) eine Sicherheitsvorrichtung aufweist, um zu verhindern, dass der Verschluss von dem Behälter des Arbeitsfluids in einer Sicherheitskonfigurati-on abgeschraubt wird, in welcher der Druck des Arbeitsfluids in dem Behälter gleich oder größer als ein vordefinierter Sicherheitsdruck ist.

10. Verschluss nach Anspruch 9, bei dem der Knauf ferner zusammenpassende bzw. Gegeneingriffselemente (70) aufweist und der Sicherheitsverschluss (1) ferner aufweist:
- einen Körper (2), der an einem ersten Gewindeende (2') mit Gewinde ver-sehen ist, wobei das Gewindeende (2') mit dem Behälter verbindbar ist; und
- einen Eingriffs/Lösekörper (4) mit Eingriffselementen (32), wobei dieser Körper innerhalb des Gewindekörpers (2) zwischen einer unteren Position, in welcher die Eingriffselemente mit den Gegeneingriffselementen (70) an dem Knauf (6) und mit Gegeneingriffselementen (16) an dem Gewinde-körper (2) in Eingriff kommen, um den Eingriffs/Lösekörper (4) rotations- bzw. drehmäßig mit dem Knauf (6) und dem Gewindekörper (2) zu kop-peln, und einer oberen Position gleiten kann, in welcher die Eingriffsele-mente (32) von den Gegeneingriffselementen (16) des Gewindekörpers (2) außer Eingriff gebracht bzw. gelöst sind.

11. Verschluss nach Anspruch 10, bei dem in der oberen Position des Eingriffs/Lösekörpers (4) die Eingriffselemente (32) des Eingriffs/Lösekörpers fer-ner von den Gegeneingriffselementen (70) des Knaufs (6) außer Eingriff ge-bracht bzw. gelöst sind.

12. Verschluss nach Anspruch 10 oder 11, bei dem der Eingriffs/Lösekörper (4) in der unteren Position durch ein Vorspannungs- bzw. Vorbelastungsmittel gehalten ist.

13. Verschluss nach Anspruch 12, bei dem das Vorspannungsmittel ein erstes vorgespanntes rückstellfähiges Element (48') zwischen dem Ein-griffs/Lösekörper (4) und einem flachen Anschlagelement aufweist.

14. Verschluss nach Anspruch 13, bei dem das flache Anschlagelement eine Scheibe (80) ist.

15. Verschluss nach einem der Ansprüche 10 bis 14, bei dem der Eingriffs/Lösekörper (4) einen inneren Gehäuseraum (38) enthält.

16. Verschluss nach Anspruch 15, bei dem der Gehäuseraum (38) das Überdruckventil (48) unterbringt.

## Revendications

1. Bouchon fileté (1) adaptable à un conteneur de liquide en fermentation et comprenant un pommeau de saisie (6), ce bouchon fileté comprend un clapet de décharge (48) qui, lorsque la pression du liquide en fermentation est égale à une certaine pression de sécurité, se positionne en configuration d'ouverture et permet au liquide en fermentation de s'échapper vers le milieu extérieur en passant par le bouchon fileté (1), le pommeau (6) comprend une poignée extérieure (62) conçue pour être saisie de manière à permettre au bouchon fileté d'être vissé au conteneur ou dévissé de celui-ci, ce pommeau est **caractérisé par le fait qu'**il inclut également une paroi de sûreté (66) qui est - du moins en partie - interne à la poignée (62) et thermiquement isolée de celle-ci par un espace vide (68), ainsi que **par le fait que** la paroi de sûreté (66) est cylindrique et concentrique à la poignée (62) et que le liquide en fermentation, lorsque le bouchon fileté se trouve en configuration ouverte, vient frapper sur la surface interne de la paroi de sûreté (66) du pommeau (16).

2. Bouchon fileté selon la Revendication 1, dans lequel la paroi de sûreté (66) et la poignée (62) se rejoignent à leur sommet.

3. Bouchon fileté selon la Revendication 2, dans lequel la paroi de sûreté (66) et la poignée (62) se rejoignent pour former un cul-de-sac (67).

4. Bouchon fileté selon n'importe laquelle des Revendications précédentes, dans lequel la poignée (62) englobe un capuchon (62').

5. Bouchon fileté selon la Revendication 4, dans lequel ce capuchon (62') est pourvu d'une multiplicité de nervures extérieures en saillie (64).

6. Bouchon fileté selon la Revendication 5, dans lequel ces nervures saillantes (64) réduisent la zone de contact entre l'utilisateur et la poignée (62).

7. Bouchon fileté selon la Revendication 6, dans lequel ces nervures saillantes (64) ont une fonction antidérapante.

8. Bouchon fileté selon n'importe laquelle des Revendications précédentes, comprenant également des passages évidés (76") dans la paroi de sûreté (66).

9. Bouchon fileté selon n'importe laquelle des Revendications précédentes, dans lequel le bouchon fileté (1) en question comprend un dispositif de sûreté destiné à empêcher le bouchon fileté de se dévisser du conteneur de liquide en fermentation s'il se met en position de sûreté, lorsque la pression du liquide en fermentation dans le conteneur est égale ou supérieure à la pression de sécurité préétablie.

10. Bouchon fileté selon la Revendication 9, dans lequel le pommeau comprend également des éléments de jonction par enclenchement (70), et dans lequel le bouchon fileté de sûreté (1) comprend en outre :
- un corps (2) enfilé dans un premier embout fileté (2') adaptable au conteneur ; et
- un corps enclenchable / déclenchable (4) par des éléments d'enclenchement (32), dont l'ensemble peut coulisser dans le corps enfilé (2), entre une position basse, dans laquelle les éléments d'enclenchement s'enclenchent dans les éléments de jonction par enclenchement (70) situés sur le pommeau (6) et dans les éléments de jonction par enclenchement (16) sur le corps enfilé (2) de manière à coupler, par rotation avec le pommeau (6), le corps pouvant enclenchable / déclenchable (4) et le corps enfilé (2) - et une position haute - dans laquelle les éléments d'enclenchement (32) sont libérés des éléments de jonction par enclenchement (16) du corps enfilé (2).

11. Bouchon fileté selon la Revendication 10, dans lequel, en position haute du corps enclenchable / déclenchable (4), les éléments d'enclenchement (32) du corps enclenchable / déclenchable sont de même libérés des éléments de jonction par enclenchement (70) du pommeau (6).

12. Bouchon fileté selon les Revendications 10 ou 11, dans lequel le corps enclenchable / déclenchable (4) est maintenu en position basse par des moyens de précontrainte.

13. Bouchon fileté selon la Revendication 12, dans lequel les moyens de précontrainte comprennent un premier élément élastique précontraint (48') situé entre le corps enclenchable / déclenchable (4) et une butée d'arrêt plate.

14. Bouchon fileté selon la Revendication 13, dans lequel la butée d'arrêt plate est un disque (80).

15. Bouchon fileté selon n'importe laquelle des Revendication 10 à 14, dans lequel le corps enclenchable / déclenchable (4) est doté d'un logement intérieur (38).

16. Bouchon fileté selon la Revendication 15, dans lequel le logement intérieur en question (38) abrite le clapet de décharge (48).
